# EUROPEAN PATENT APPLICATION

(11) **EP 4 343 026 A2**
(43) Date of publication of application: **27.03.2024**
(21) Application number: 23160017.2
(22) Date of filing: 03.03.2023
(51) Int. Cl.: C25B 1/02, C25B 9/23, C25B 9/70

(54) **MEMBRANE ELECTRODE ASSEMBLY, LAMINATING METHOD, ELECTROCHEMICAL CELL, STACK, AND ELECTROLYZER**

(30) Priority: 20.09.2022 JP 2022149622
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: YOSHINAGA, Norihiro, Tokyo, 105-0023 (JP); ONO, Akihiko, Tokyo, 105-0023 (JP); SUGANO, Yoshitsune, Tokyo, 105-0023 (JP); NAKANO, Yoshihiko, Tokyo, 105-0023 (JP); HIRAZAWA, Hiroaki, Tokyo, 105-0023 (JP)
(74) Representative: Marks & Clerk LLP

(57) **Abstract**

A membrane electrode assembly according to an embodiment includes a first electrode, a second electrode, an electrolyte membrane provided between the first electrode and the second electrode and a first seal provided on a peripheral portion of the first electrode, having a first opening, housing the first electrode in the first opening, and being contact with the electrolyte membrane or the first seal and a second seal provided on a peripheral portion of the second electrode, having a second opening, housing the second electrode in the second opening, and being contact with the electrolyte membrane.

## Description

### FIELD

Embodiments described herein relate to a membrane electrode assembly, a laminating method, an electrochemical cell, a stack, and an electrolyzer.

### BACKGROUND

In recent years, electrochemical cells have been actively studied. Among electrochemical cells, for example, a polymer electrolyte water electrolysis cell (PEMEC: Polymer Electrolyte Membrane Electrolysis Cell) is expected to be used for hydrogen generation in a large-scale energy storage system. In order to ensure sufficient durability and electrolytic properties, platinum (Pt) nanoparticle catalysts are generally used for PEMEC cathodes, and noble metal catalysts such as iridium (Ir) nanoparticle catalysts are used for positive electrodes. Also, a method for obtaining hydrogen from ammonia is considered.

### BRIEF DESCRIPTION OF THE DRAWINGS

FIG. 1 is a schematic cross-sectional diagram of a membrane electrode assembly according to an embodiment.
FIG. 2 is a schematic diagram of an electrolyte membrane according to an embodiment.
FIG. 3 is a schematic diagram of a first seal according to an embodiment.
FIG. 4 is a schematic diagram of a first electrode and a second electrode according to an embodiment.
FIG. 5 is a schematic diagram of a second seal according to an embodiment.
FIG. 6 is a schematic cross-sectional diagram of a membrane electrode assembly according to an embodiment.
FIG. 7 is a process schematic diagram of a membrane electrode assembly according to an embodiment.
FIG. 8 is a process schematic diagram of a membrane electrode assembly according to an embodiment.
FIG. 9 is a process schematic diagram of a membrane electrode assembly according to an embodiment.
FIG. 10 is a process schematic diagram of a membrane electrode assembly according to an embodiment.
FIG. 11 is a process schematic diagram of a membrane electrode assembly according to an embodiment.
FIG. 12 is a process schematic diagram of a membrane electrode assembly according to an embodiment.
FIG. 13 is a process schematic diagram of a membrane electrode assembly according to an embodiment.
FIG. 14 is a process schematic diagram of a membrane electrode assembly according to an embodiment.
FIG. 15 is a process schematic diagram of a membrane electrode assembly according to an embodiment.
FIG. 16 is a process schematic diagram of a membrane electrode assembly according to an embodiment.
FIG. 17 is a schematic diagram of an electrochemical cell according to an embodiment.
FIG. 18 is a schematic diagram of a stack according to an embodiment.
FIG. 19 is a conceptual diagram of an electrolyzer second seal according to an embodiment.

### DETAILED DESCRIPTION

A membrane electrode assembly according to an embodiment includes a first electrode, a second electrode, an electrolyte membrane provided between the first electrode and the second electrode and a first seal provided on a peripheral portion of the first electrode, having a first opening, housing the first electrode in the first opening, and being contact with the electrolyte membrane or the first seal and a second seal provided on a peripheral portion of the second electrode, having a second opening, housing the second electrode in the second opening, and being contact with the electrolyte membrane.

Hereinafter, the embodiments will be described with reference to the drawings. It is to be noted that the same reference numerals are given to common components throughout the embodiments, and redundant explanations are omitted.

In the specification, values at 25 [°C] and 1 atm (atmosphere) are shown. Each thickness of the members is an average of distance in a stacking direction.

### (First Embodiment)

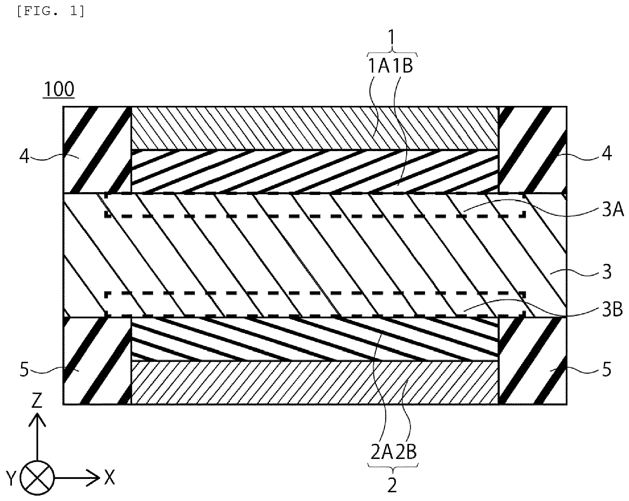

The first embodiment relates to a membrane electrode assembly and a manufacturing method for a membrane electrode assembly. FIG. 1 is a schematic cross-sectional diagram of a membrane electrode assembly 100 according to the first embodiment. The membrane electrode assembly 100 includes a first electrode 1, a second electrode 2, an electrolyte membrane 3, a first seal 4, and a second seal 5. It is preferable that the first electrode 1 is an anode electrode and the second electrode 2 is a cathode electrode. The membrane electrode assembly 100 is preferably used for an electrochemical cell or stack which generates hydrogen or oxygen. The members constituting the membrane electrode assembly 100 are stacked in a direction, for example, Z direction perpendicular to X-Y plane. A width direction of the membrane electrode assembly 100 is X direction. A length direction of the membrane electrode assembly 100 is Y direction.

The membrane electrode assembly 100 can be also used for an electrolytic generation of ammonia. The membrane electrode assembly 100 can be also used as a membrane electrode assembly of an electrolyzer for synthesizing ammonia. Hereinafter, the first embodiment and other embodiments will be described with showing examples of water electrolysis, embodiments can be applied for a membrane electrode assembly for other than the water electrolysis, for example, an electrolysis of synthesizing ammonia which generates ammonia by supplying ultrapure water at an anode, generating proton and oxygen decomposing water at the anode, passing the generated proton through the electrolyte membrane, and connecting nitrogen supplied at a cathode, proton, and electron. The membrane electrode assembly 100 can be used as a membrane electrode assembly which generates hydrogen by electrolyzing ammonia. The membrane electrode assembly of the embodiment can be used for a hydrogen generator. Hereinafter, the first embodiment and other embodiments will be described with showing examples of water electrolysis, the membrane electrode assembly 100 can be applied for a membrane electrode assembly for other than the water electrolysis, for example, an electrolysis of decomposing ammonia which generates hydrogen by supplying ammonia at a cathode, generating proton and nitrogen decomposing water at the anode, passing the generated proton through the electrolyte membrane, and connecting proton and and electron.

The first electrode 1 includes a first substrate 1A and a first catalyst layer 1B. The first catalyst layer 1B is provided on the first substrate 1A. The first catalyst layer 1B is provided on the electrolyte membrane 3 side. It is preferable that the first catalyst layer 1B is in direct contact with the electrolyte membrane 3.

It is preferable to use a member being porous and highly conductive as the first substrate 1A. The first substrate 1A is a porous member which allows to pass gas and/or liquid. The first substrate 1A is, for example, a carbon paper or a metal mesh. A porous substrate of bulb metal is preferable for the metal mesh. It is preferable that the porous substrate of bulb metal is a porous substrate containing one or more metals selected from the group consisting of titanium, aluminum, tantalum, niobium, hafnium, zirconium, tungsten, bismuth, and antimony or a porous substrate of one metal selected from the group consisting of titanium, aluminum, tantalum, niobium, hafnium, zirconium, tungsten, bismuth, and antimony.

The first catalyst layer 1B contains catalyst metal. It is preferable that the first catalyst 1B contains particles of the catalyst metal and the catalyst metal of the first catalyst layer 1B is not supported on a carrier. It is preferable that the first catalyst layer 1B is a porous catalyst layer. It is preferable that the catalyst metal contains, for example, one or more selected from the group consisting of Ir, Ru, and Pt, but not limited thereto. It is preferable that the metal catalyst is metal, alloy, or metal oxide.

The amount of metal per area of the first catalyst layer 1B is preferably 0.02 [mg / cm²] or more and 1.0 [mg / cm²] or less and more preferably 0.05 [mg / cm²] or more and 0.5 [mg / cm²] or less. This total weight can be measured by ICP-MS.

A porous ratio of the first catalyst layer 1B is preferably 10 [%] or more and 90[%] or less and more preferably 30 [%] or more and 70 [%] or less. When the amount of metal per area of the first catalyst layer 1B is within the above range and has high porosity and hydrogen which is generated at the cathode (second electrode 1B) passes through the electrolyte membrane 3 and leaks into the anode (first electrode 1), hydrogen is easily to pass through the first catalyst layer 1B and the first substrate 1A since the first catalyst has low density. When leakage measures according to the embodiment are taken, hydrogen leakage can be effectively suppressed even if the first catalyst layer 1B which is easily to leak hydrogen due to the high porous is used. When a catalyst layer which is not easily to leak hydrogen is used for the first catalyst layer 1B, the membrane electrode assembly 100 according to the embodiment can effectively suppress hydrogen leakage.

The second electrode 2 includes a second substrate 2A and a second catalyst layer 2B. The second catalyst layer 2B is provided on the second substrate 2A. The second catalyst layer 2B is provided on the electrolyte membrane 3 side. It is preferable that the second catalyst layer 2B is in direct contact with the electrolyte membrane 3.

It is preferable to use a member being porous and highly conductive as the second substrate 2A. The second substrate 2A is a porous member which allows to pass gas and/or liquid. The second substrate 2A is, for example, a carbon paper or a metal mesh. A porous substrate of bulb metal is preferable for the metal mesh. It is preferable that the porous substrate of bulb metal is a porous substrate containing one or more metals selected from the group consisting of titanium, aluminum, tantalum, niobium, hafnium, zirconium, tungsten, bismuth, and antimony or a porous substrate of one metal selected from the group consisting of titanium, aluminum, tantalum, niobium, hafnium, zirconium, tungsten, bismuth, and antimony.

The second catalyst layer 2B contains catalyst metal. It is preferable that the second catalyst 2B contains particles of the catalyst metal and the catalyst metal of the second catalyst layer 2B is not supported on a carrier. It is preferable that the second catalyst layer 2B is a porous catalyst layer. It is preferable that the catalyst metal contains, for example, one or more selected from the group consisting of Pt, Rh, Os, Ir, Pd, and Au, but not limited thereto. It is preferable that the metal catalyst is metal, alloy, or metal oxide.

The amount of metal per area of the second catalyst layer 2B is preferably 0.02 [mg / cm²] or more and 1.0 [mg / cm²] or less and more preferably 0.05 [mg / cm²] or more and 0.5 [mg / cm²] or less. This total weight can be measured by ICP-MS.

A porous ratio of the second catalyst layer 2B is preferably 10 [%] or more and 90[%] or less and more preferably 30 [%] or more and 70 [%] or less.

The electrolyte membrane 3 is a proton conductive membrane. It is preferable that the electrolyte membrane 3 contains fluorinated polymers or aromatic hydrocarbon polymers containing one or more selected from the group consisting of a sulfonic acid group, sulfonimide group, and sulfate group. As the fluorinated polymers having a sulfonic acid group, for example, NAFION (trademark, DuPont), FLEMION (trademark, Asahi Glass Co., Ltd.), SELEMION (trademark, Asahi Glass Co., Ltd.), Aquivion (trademark, Solvay Specialty Polymers) or Aciplex (trademark, Asahi Kasei Corp.) or the like is preferably used.

A thickness of the electrolyte membrane can be adjusted appropriately considering membrane permeation properties and durability. In view of strength, dissolution resistance, and output characteristics, the thickness of the electrolyte membrane is preferably 20[pm] or more and 500 [pm] or less, more preferably 50 [um] or more and 300 [pm] or less, and still more preferably 80 [µm] or more and 200[µm] or less.

It is preferable that the electrolyte membrane 3 includes a noble metal region 3A on the first electrode 1 side. The noble metal region 3A contains noble metal particles. It is preferable that the noble metal region 3A exists on a surface of the electrolyte membrane 3. It is preferable that the noble metal region 3A consists of one region but may also consists of a plurality of separated regions.

It is preferable that the noble metal particles are particles of one or more noble metal selected from the group consisting of Pt, Re, Rh, Ir, Pd, and Ru. The noble metal particles may include alloy particles containing one or more selected from the group consisting of Pt, Re, Rh, Ir, Pd, and Ru. It is preferable that the noble metal particles are particles of one kind of noble metal selected from the group consisting of Pt, Re, Rh, Ir, Pd, and Ru. It is preferable that the noble metal particles are particles of Pt. It is preferable that the noble metal particles are particles of Re. It is preferable that the noble metal particles are particles of Rh. It is preferable that the noble metal particles are particles of Ir. It is preferable that the noble metal particles are particles of Pd. It is preferable that the noble metal particles are particles of Ru.

The noble metal particles oxidize hydrogen which is generated on the cathode side and pass through the electrolyte membrane 3. By virtue of the noble metal particles, the hydrogen leakage is reduced. Hydrogen extracted from the cathode is hardly oxidized because the noble metal particles are contained on the anode side. A region containing the noble metal particles may also exist on the second electrode 2 (cathode) side of the electrolyte membrane 3.

An average of circumscribed circle diameters of the noble metal particles is preferably 0.5 [nm] or more and 50 [nm] or less, more preferably 1 [nm] or more and 10 [nm] or less, still more preferably 1 [nm] or more 5[nm] or less. The average of circumscribed circle diameters of the noble metal particles is measured by observing a cross section such as FIG. 1 with SEM (Scanning Electron Microscope) or TEM (Transmission Electron Microscope)

The first seal 4 is an insulating member which is provided on a peripheral portion of the first electrode 1. The first seal 4 includes a first opening 4A. The first electrode 1 is housed in the first opening 4A. A surface of the first seal 4 on the electrolyte membrane 3 is in contact with the electrolyte membrane 3 and preferably in direct contact with the electrolyte membrane 3. The inside surface of the first seal 4 is in contact with the side surface of the first electrode 1 and preferably in direct contact with the side surface the first electrode 1.

The second seal 5 is an insulating member which is provided on a peripheral portion of the second electrode 2. The second seal 5 includes a second opening 5A. The second seal 5 is housed in the second opening 5A. A surface of the second seal 5 on the electrolyte membrane 3 is in contact with the electrolyte membrane 3 and preferably in direct contact with the electrolyte membrane 3. The inside surface of the second seal 5 is in contact with the side surface of the second electrode 2 and preferably in direct contact with the side surface of the second electrode 2.

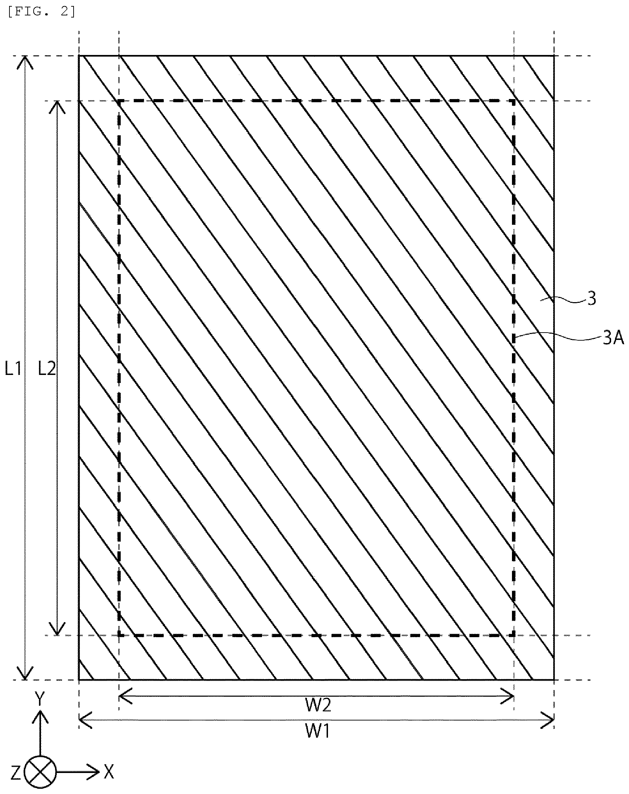

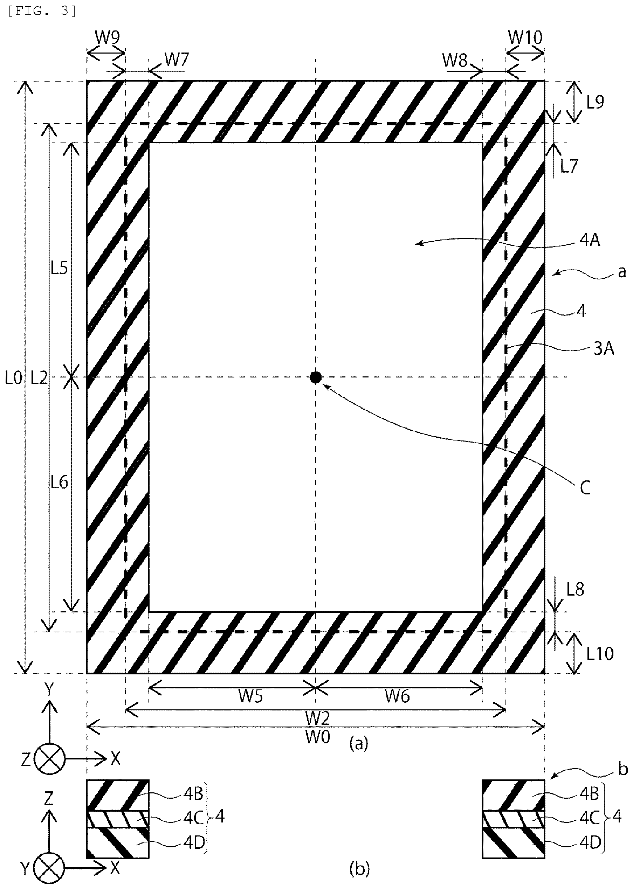

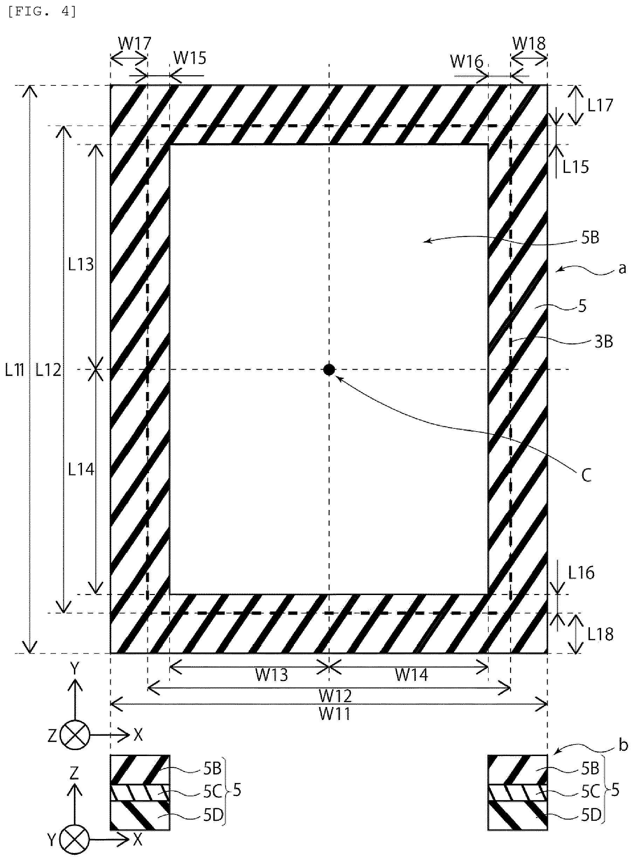

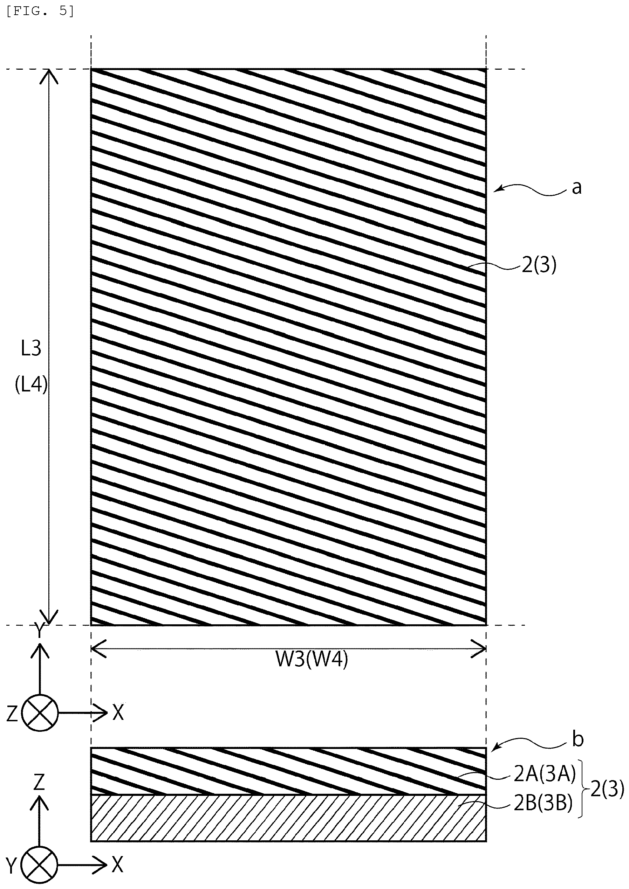

A relations of position and the like of the first electrode 1, the second electrode 2, the electrolyte membrane 3, the first seal 4, and the second seal 5 will be described with reference to diagrams of FIG. 2, FIG. 3, FIG. 4, and FIG. 5. FIG. 2 illustrates a schematic upper diagram of the electrolyte membrane 3. FIG. 3 illustrates a schematic upper diagram a and a schematic cross-sectional diagram of the first seal 4. FIG. 4 illustrates a schematic upper diagram a and a schematic cross-sectional diagram of the first electrode 1 and the second electrode 2. FIG. 5 illustrates a schematic upper diagram a and a schematic cross-sectional diagram of the second seal 5.

The following description assumes that the shapes of the members including the electrolyte membrane 3 and others are square (cuboid). When the shapes of the members are different (not square (not cuboid)), the relations of, for example, position and others of the first electrode 1, the second electrode 2, the electrolyte membrane 3, the first seal 4, and the second seal 5 described in the embodiments can be applied to them. The width and the length can be determined from the circumscribing square of the member. Considering the positions and the overlapping relations of the members illustrated in FIG. 3 to FIG. 5, the size relations of width and length and the differential relations which are explained in below can be applied.

A width of the electrolyte membrane 3 is denoted by W1. A length of the electrolyte membrane 3 is denoted by L1. A width of the noble metal region 3A of the electrolyte membrane 3 (the span of the noble metal region 3A in the width direction of the electrolyte membrane 3) is denoted by W2. A length of the noble metal region 3A of the electrolyte membrane 3 (the span of the noble metal region 3A in the length direction of the electrolyte membrane 3) is denoted by L2. L1 ≥ W1 is satisfied. L2 ≥ W2 is satisfied.

A width of the first seal 4 (the span of the first seal 4 in the width direction of the electrolyte membrane 3) is denoted by W0. A length of the first seal 4 (the span of the first seal 4 in the length direction of the electrolyte membrane 3) is denoted by L0. L0 ≥ W0 is satisfied.

The sizes and the shapes of the first seal 4 and the second seal 5 may be the same or different.

A width of the first electrode 1 (the span of the first electrode 1 in the width direction of the electrolyte membrane 3) is denoted by W3. A length of the first electrode 1(the span of the first electrode 1 in the length direction of the electrolyte membrane 3) is denoted by L3. The sizes and the shapes of the first electrode 1 and the second electrode 2 may be the same or different. L3 ≥ W3 is satisfied.

When W1 - W2 (subtract W2 from W1) is 0 and L1 - L2 (subtract L2 from L1) is 0 (the noble metal region 3A exists entirely on the surface of the electrolyte membrane 3 on the first electrode 1 side), the reducing hydrogen leakage is less effective. W1 - W2 denotes a difference between the width of the electrolyte membrane 3 and the width of the noble metal region 3A. L1 - L2 denotes a difference between the length of the electrolyte membrane 3 and the length of the noble metal region 3A. It is preferable that W1 - W2 > 0 and L1 - L2 > 0 are satisfied.

W1 - W2 is preferably 0.01 times or more and 0.98 times or less of W1 and more preferably 0.02 times or more and 0.2 or less of W1. L1 - L2 is preferably 0.01 times or more and 0.98 times or less of L1 and more preferably 0.02 times or more and 0.2 times or less of L1. The effectiveness of reducing the hydrogen crossover and the hydrogen leakage of a region where the the noble metal region 3A of the electrolyte membrane 3 does not exist on the first electrode 1 side may be changed depending on whether the electrolyte membrane 3 is large or the electrolyte membrane 3 is small. When W1 - W2 = 1 [mm] and L1 - L2 = 1 [mm], 1 [mm] difference may be relatively small if the electrolyte membrane 3 is large and 1 [mm] difference may be relatively large if the electrolyte membrane 3 is small.

It is preferable to satisfy W1 > W2 > W3 and L1 > L2 > L3. This relation means that the size of the noble metal region 3A is between the size of the electrolyte membrane 3 and the size of the first electrode 1. When this size relation is satisfied, the first seal 4 is in contact with the surface of the electrolyte membrane 3 where the noble metal region 3A exists and the surface where the noble metal region 3A does not exist and is preferable in direct contact with the surface of the electrolyte membrane 3 where the noble metal region 3A exists and the surface where the noble metal region 3A does not exist. Since the size (area) of the noble metal region 3A is larger than the size (area) of the first electrode 1, hydrogen leaking through the first electrode 1 is effectively oxidized in the noble metal region 3A. When the size (area) of the noble metal region 3A is smaller than the size (area) of the first electrode 1, hydrogen leaks easily through the first electrode 1 from the electrolyte membrane 3 where the noble metal region 3A does not exist.

The first seal 4 is slippery on the surface of the electrolyte membrane 3 where the noble metal region 3A exists but not slippery on the surface of the electrolyte membrane 3 where the noble metal region 3A does not exist. When W1 > W2 > W3 and L1 > L2 > L3 is satisfied, the first seal 4 reduces expansion and contraction of the electrolyte membrane 3 since the first seal 4 is in direct contact with the non-slippery surface of the electrolyte membrane 3 where the noble metal region 3A does not exist.

In view of reducing both the hydrogen leakage and the slippage between the first seal 4 and the electrolyte membrane 3 it is preferable that W2 is 0.8 times or more and less than 1 times of W1, L2 is 0.8 times or more and less than 1 times of L1, and the noble metal region 3A on the first electrode 1 side is entirely surrounded by the region which is not the noble metal region 3A.

A distance from the center of the electrolyte membrane 3 on the first electrode 1 side to one end of the noble metal region 3A in the width direction is denoted by W5. A distance from the center of the electrolyte membrane 3 on the first electrode 1 side to the other end of the noble metal region 3A in the width direction is denoted by W6. W5 and W6 is preferably 0.4 times or more and less than 0.5 times of W1 and more preferably 0.45 times or more and 0.48 times or less of W1. When W5 and W6 are small, the first seal 4 can only contain the small first electrode 1 since the size of the the first opening 4A is small relative to the size of the electrolyte membrane 3. When W5 and W6 are large, the area where the first seal 4 is in contact with the electrolyte membrane 3 is small.

A distance from the center of the electrolyte membrane 3 on the first electrode 1 side to one end of the noble metal region 3A in the length direction is denoted by L5. A distance from the center of the electrolyte membrane 3 on the first electrode 1 side to the other end of the noble metal region 3A in the length direction is denoted by L6. L5 and L6 is preferably 0.4 times or more and less than 0.5 times of L1 and more preferably 0.45 times or more and 0.48 times or less of L1. When L5 and L6 are small, the first seal 4 can only contain the small first electrode 1 since the size of the the first opening 4A is small relative to the size of the electrolyte membrane 3. When L5 and L6 are large, the area where the first seal 4 is in contact with the electrolyte membrane 3 is small.

It is preferable that W1 - W3 (subtract W3 from W1) satisfies 0.01 times or more and 0.2 times or less of W1 and L1 - L3 (subtract L3 from L1) satisfies 0.01 times or more and 0.2 times or less of L1. W1 - W3 and L1 - L3 are substantially the width of a frame part of the first seal 4. When the electrolyte membrane 3 is large, it is preferable that the width of a frame part of the first seal 4 is somewhat large. When the electrolyte membrane 3 is small, the width of a frame part of the first seal 4 is narrow enough. From the above point of view, it is preferable that W1 - W3 satisfies 0.04 times or more and 0.1 times or less of W1 and L1 - L3 satisfies 0.04 times or more and 0.1 times or less of L1.

When the difference between W5 and W6 and/or the difference between L5 and L6 are large, the area where the first seal 4 is in contact with the electrolyte membrane 3 may be unbalanced. When the area where the first seal 4 is in contact with the electrolyte membrane 3 is unbalanced, the slipperiness between the first seal 4 and the electrolyte membrane 3 varies greatly depending on the location. From the above point of view, the difference between W5 and W6 (|W5 - W6| (absolute value of difference between W5 and W6)) is preferably 0 times or more and 0. 10 times or less of W5 + W6 (sum of W5 and W6) and more preferably 0 times or more and 0. 05 times or less of W5 + W6. From the above point of view, the difference between L5 and L6 (|L5 - L6| (absolute value of difference between L5 and L6)) is preferably 0 times or more and 0. 10 times or less of L5 + L6 (sum of L5 and L6)and more preferably 0 times or more and 0. 05 times or less of L5 + L6.

In view of reducing expansion and contraction of the electrolyte membrane 3, it is preferable that the width where the first seal 4 in in contact with the noble metal region 3A of the electrolyte membrane 3 (W7 or W8) is narrower than the width where the first seal 4 is in contact with the region which is not the noble metal region 3A of the electrolyte membrane 3 (W9 or W10).

In view of reducing expansion and contraction of the electrolyte membrane 3, it is preferable that a length where the first seal 4 in in contact with the noble metal region 3A of the electrolyte membrane 3 (L7 or L8) is shorter than a length where the first seal 4 is in contact with the region which is not the noble metal region 3A of the electrolyte membrane 3 (L9 or L10).

It is preferable that the width W1 (the width of the electrolyte membrane 3) and the width W0 (the width of the first seal 4) satisfies W0 ≥ W1. It is preferable that the length L1 (the length of the electrolyte membrane 3) and the length L0 (the length of the first seal 4) satisfies L0 ≥ L1.

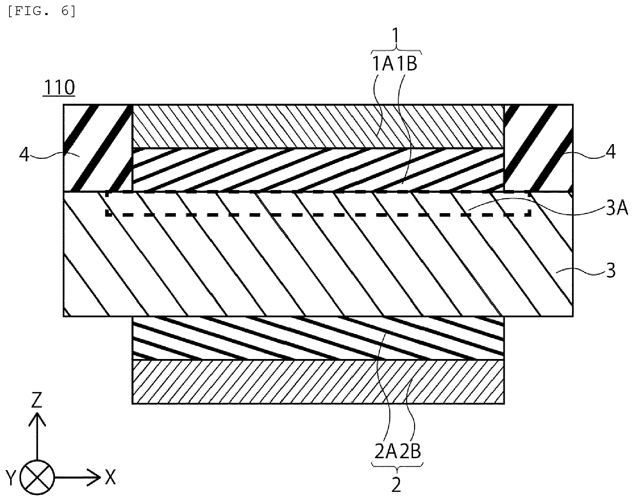

The electrolyte membrane 3 may include a noble metal region 3B on the second electrode 2 side. The noble metal region 3B contains noble metal particles as well as the noble metal region 3A. When the electrolyte membrane 3 includes the noble metal region 3B or the others, the second seal is preferably provided on the second electrode 2 side. The membrane electrode assembly 100 illustrated in FIG. 1 includes the second seal 5. The membrane electrode assembly 110 illustrated in FIG. 6 does not include the second seal 5. The noble metal region 3B and/or the second seal 5 of the membrane electrode assembly 100 may be omitted.

When the noble metal region 3B exists in the electrolyte membrane 3, a width of the noble metal region 3B (the span of the noble metal region 3B in the width direction of the electrolyte membrane 3) is denoted by W12 and a length of the noble metal region 3B (the span of the noble metal region 3B in the length direction of the electrolyte membrane 3) is denoted by L12. L12 ≥ W12 is satisfied.

A width of the second seal 5 (the span of the second seal 5 in the width direction of the electrolyte membrane 3) is denoted by W11. A length of the second seal 5 (the span of the second seal 5 in the length direction of the electrolyte membrane 3) is denoted by L11. L11 ≥ W11 is satisfied.

A width of the second electrode 2 (the span of the second electrode 2 in the width direction of the electrolyte membrane 3) is denoted by W4. A length of the second electrode 2(the span of the second electrode 2 in the length direction of the electrolyte membrane 3) is denoted by L4. L4 ≥ W4 is satisfied.

W1 - W12 (subtract W12 from W1) is preferably 0.01 times or more and 0.98 times or less of W1 and more preferably 0.02 times or more and 0.2 times or less of W1. L1 - L12 (subtract L12 from L1)is preferably L1 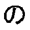 0.01 times or more and 0.98 times or less of L1. The effectiveness of reducing the hydrogen crossover and the hydrogen leakage of a region where the the noble metal region 3A of the electrolyte membrane 3 does not exist on the second electrode 2 side may be changed depending on whether the electrolyte membrane 3 is large or the electrolyte membrane 3 is small. When W1 - W12 = 1 [mm] and L1 - L12 = 1 [mm], 1 [mm] difference may be relatively small if the electrolyte membrane 3 is large and 1 [mm] difference may be relatively large if the electrolyte membrane 3 is small.

It is preferable to satisfy W1 > W12 > W4 and L1 > L12 > L4. This relation means that the size of the noble metal region 3B is between the size of the electrolyte membrane 3 and the size of the second electrode 2. When this size relation is satisfied, the second seal 5 is in contact with the surface of the electrolyte membrane 3 where the noble metal region 3B exists and the surface where the noble metal region 3B does not exist and is preferable in direct contact with the surface of the electrolyte membrane 3 where the noble metal region 3B exists and the surface where the noble metal region 3B does not exist. Since the size (area) of the noble metal region 3B is larger than the size (area) of the second electrode 2, hydrogen leaking through the first electrode 1 is effectively oxidized in the noble metal region 3A. When the size (area) of the noble metal region 3B is smaller than the size (area) of the second electrode 2, hydrogen leaks easily through the first electrode 1 from the electrolyte membrane 3 where the noble metal region 3B does not exist.

The second seal 5 is slippery on the surface of the electrolyte membrane 3 where the noble metal region 3B exists but not slippery on the surface of the electrolyte membrane 3 where the noble metal region 3B does not exist. When W1 > W12 > W4 and L1 > L12 > L4 is satisfied, the second seal 5 reduces expansion and contraction of the electrolyte membrane 3 since the second seal 5 is in direct contact with the non-slippery surface of the electrolyte membrane 3 where the noble metal region 3B does not exist.

In view of reducing both the hydrogen leakage and the slippage between the second seal 5 and the electrolyte membrane 3 it is preferable that W12 is 0.8 times or more and 0.99 times or less of W1, L12 is 0.8 times or more and 0.99 times or less of L1, and the noble metal region 3B on the second electrode 2 side is entirely surrounded by the region which is not the noble metal region 3B.

A distance from the center of the electrolyte membrane 3 on the second electrode 2 side to one end of the noble metal region 3B in the width direction is denoted by W13. A distance from the center of the electrolyte membrane 3 on the second electrode 2 side to the other end of the noble metal region 3B in the width direction is denoted by W14. W13 and W14 is preferably 0.4 times or more and 0.495 times or less of W1 and more preferably 0.45 times or more and 0.48 times or less of W1. When W13 and W14 are small, the first seal 4 can only contain the small second electrode 2 since the size of the the second opening 5A is small relative to the size of the electrolyte membrane 3. When W13 and W4 are large, the area where the second seal 5 is in contact with the electrolyte membrane 3 is small.

A distance from the center of the electrolyte membrane 3 on the second electrode 2 side to one end of the noble metal region 3B in the length direction is denoted by L13. A distance from the center of the electrolyte membrane 3 on the second electrode 2 side to the other end of the noble metal region 3B in the length direction is denoted by L14. L13 and L14 is preferably 0.4 times or more and 0.495 times or less of L1 and more preferably 0.45 times or more and 0.48 times or less of L1. When L13 and L14 are small, the second seal 5 can only contain the small second electrode 2 since the size of the the second opening 5A is small relative to the size of the electrolyte membrane 3. When L13 and L14 are large, the area where the second seal 5 is in contact with the electrolyte membrane 3 is small.

It is preferable that W1 - W4 (subtract W4 from W1) satisfies 0.01 times or more and 0.2 times or less of W1 and L1 - L4 (subtract L4 from L1) satisfies 0.01 times or more and 0.2 times or less of L1. W1 - W4 and L1 - L4 are substantially the width of a frame part of the second seal 5. When the electrolyte membrane 3 is large, it is preferable that the width of a frame part of the second seal 5 is somewhat large. When the electrolyte membrane 3 is small, the width of a frame part of the second seal 5 is narrow enough. From the above point of view, it is preferable that W1 - W4 satisfies 0.04 times or more and 0.12 times or less of W1 and L1 - L4 satisfies 0.04 times or more and 0.12 times or less of L1.

When the difference between W13 and W14 and/or the difference between L13 and L14 are large, the area where the second seal 5 is in contact with the electrolyte membrane 3 may be unbalanced. When the area where the second seal 5 is in contact with the electrolyte membrane 3 is unbalanced, the slipperiness between the second seal 5 and the electrolyte membrane 3 varies greatly depending on the location. From the above point of view, the difference between W13 and W14 (|W13 - W14|( absolute value of difference between W13 and W14)) is preferably 0 times or more and 0. 10 times or less of W13 + W14 and more preferably 0 times or more and 0. 05 times or less of W13 + W14 (sum of W13 and W14). From the above point of view, the difference between L13 and L14 (|L13 - L14| (absolute value of difference between L13 and L14)) is preferably 0 times or more and 0. 10 times or less of L13 + L14 and more preferably 0 times or more and 0. 05 times or less of L13 + L14.

In view of reducing expansion and contraction of the electrolyte membrane 3, it is preferable that the width where the second seal5 in in contact with the noble metal region 3B of the electrolyte membrane 3 (W15 or W16) is narrower than the width where the second seal 5 is in contact with the region which is not the noble metal region 3B of the electrolyte membrane 3 (W17 or W18).

In view of reducing expansion and contraction of the electrolyte membrane 3, it is preferable that the length where the second seal 5 in in contact with the noble metal region 3B of the electrolyte membrane 3 (L15 or L16) is shorter than the length where the second seal 5 is in contact with the region which is not the noble metal region 3B of the electrolyte membrane 3 (L17 or L18).

It is preferable that the width W1 and the width W11 (the width of the second seal 5) satisfies W11 ≥ W1. It is preferable that the length L1 and the length L11 (the length of the second seal 5) satisfies L11 ≥ L1.

The first seal 4 includes a first rubber sheet 4B and a first resin sheet 4C. It is preferable that the first seal 4 includes the first rubber sheet 4B, the first resin sheet 4C, and a second rubber sheet 4D. The first resin sheet 4C is provided between the first rubber sheet 4B and the second rubber sheet 4D.
It is preferable that the first rubber sheet 4B and the first resin sheet 4C are stacked. It is preferable that the first rubber sheet 4B, the first resin sheet 4C, and the second rubber sheet 4D are stacked.

A thickness of the first seal 4 is, for example, 20 [um] or more and 2000 [pm] or less. The thickness of the first seal 4 is 0.6 times or more and 1.0 times or less of the thickness of the first electrode 1.

An adhesion layer which is not illustrated can be provided between the first seal 4 and the electrolyte membrane 3 and/or between the first seal 4 and the first electrode 1.

A Young's modulus of the first seal 4 within a range of 5 [°C] or more and 100[°C] or less is preferably 0.001 [GPa] or more and 5 [GPa] or less and is more preferably 0.01 [GPa] or more and 3 [GPa] or less. When the Young's modulus of the first seal 4 is high, expansion and contraction can be reduced.

It is preferable that the first rubber sheet 4B is natural rubber sheet or synthetic rubber sheet. it is preferable that the first rubber sheet 4B contains one or more selected from the group consisting of ethylene propylene diene rubber, silicon rubber, nitrile rubber, fluoro rubber, urethane rubber, acrylic rubber, isopropyl rubber, styrene rubber, butyl rubber, and ethylene propylene rubber. The first rubber sheet 4B may contain one or more selected from the group consisting of a carbon fiber, a metal mesh, and a filler to adjust the Young's modulus and a linear expansion coefficient of the first rubber sheet 4B. The surface of the first rubber sheet 4B facing to the electrolyte membrane 3 is in contact with the surface of the electrolyte membrane 3 and preferably in direct contact with the surface the electrolyte membrane 3.

The first resin sheet 4C is an insulating sheet containing one or more selected from the group consisting of thermoplastic such as polyethylene terephthalate (PET), polyimide, polypropylene, polyvinyl chloride, and the like and thermosetting plastic such as melamine resin, epoxy resin and the like. The first resin sheet 4C may contain one or more selected from the group consisting of a carbon fiber, a metal mesh, and a filler to adjust the Young's modulus and a linear expansion coefficient of the first resin sheet 4C. The inside surface of the first resin sheet 4C is in contact with the side surface of the first electrode 1 and preferably in direct contact with the side surface the first electrode 1.

It is preferable that the second rubber sheet 4D is natural rubber sheet or synthetic rubber sheet. it is preferable that the second rubber sheet 4D contains one or more selected from the group consisting of ethylene propylene diene rubber, silicon rubber, nitrile rubber, fluoro rubber, urethane rubber, acrylic rubber, isopropyl rubber, styrene rubber, butyl rubber, and ethylene propylene rubber. The second rubber sheet 4D may contain one or more selected from the group consisting of a carbon fiber, a metal mesh, and a filler to adjust the Young's modulus and a linear expansion coefficient of the second rubber sheet 4D.

The second seal 5 includes a third rubber sheet 5B and a second resin sheet 5C. It is preferable that the second seal 5 includes the third rubber sheet 5B, the second resin sheet 5C, and a fourth rubber sheet 5D. The second resin sheet 5C is provided between the third rubber sheet 5B and the fourth rubber sheet 5D.
It is preferable that the third rubber sheet 5B and the second resin sheet 5C are stacked. It is preferable that the third rubber sheet 5B, the second resin sheet 5C, and the fourth rubber sheet 5D are stacked.

A thickness of the second seal 5 is, for example, 20 [um] or more and 2000 [pm] or less. The thickness of the second seal 5 is 0.6 times or more and 1.0 times or less of the thickness of the second electrode 2.

An adhesion layer which is not illustrated can be provided between the first seal 4 and the electrolyte membrane 3 and/or between the second seal 5 and the second electrode 2.

A Young's modulus of the second seal 5 within a range of 5 [°C] or more and 100 [°C] or less is preferably 0.01 [GPa] or more and 5 [GPa] or less and is more preferably 0.01 [GPa] or more and 3 [GPa] or less. When the Young's modulus of the second seal 5 is high, expansion and contraction can be reduced.

It is preferable that the third rubber sheet 5B is natural rubber sheet or synthetic rubber sheet. it is preferable that the third rubber sheet 5B contains one or more selected from the group consisting of ethylene propylene diene rubber, silicon rubber, nitrile rubber, fluoro rubber, urethane rubber, acrylic rubber, isopropyl rubber, styrene rubber, butyl rubber, and ethylene propylene rubber. The third rubber sheet 5B may contain one or more selected from the group consisting of a carbon fiber, a metal mesh, and a filler to adjust the Young's modulus and a linear expansion coefficient of the third rubber sheet 5B. The surface of the third rubber sheet 5B facing to the electrolyte membrane 3 is in contact with the surface of the electrolyte membrane 3 and preferably in direct contact with the surface the electrolyte membrane 3.

The second resin sheet 5C is an insulating sheet containing one or more selected from the group consisting of thermoplastic such as polyethylene terephthalate (PET), polyimide, polypropylene, polyvinyl chloride, and the like and thermosetting plastic such as melamine resin, epoxy resin and the like. The second resin sheet 5C may contain one or more selected from the group consisting of a carbon fiber, a metal mesh, and a filler to adjust the Young's modulus and a linear expansion coefficient of second resin sheet 5C. The inside surface of the resin sheet 5C is in contact with the side surface of the second electrode 2 and preferably in direct contact with the side surface of the second electrode 2.

It is preferable that the fourth rubber sheet 5D is natural rubber sheet or synthetic rubber sheet. it is preferable that the fourth rubber sheet 5D contains one or more selected from the group consisting of ethylene propylene diene rubber, silicon rubber, nitrile rubber, fluoro rubber, urethane rubber, acrylic rubber, isopropyl rubber, styrene rubber, butyl rubber, and ethylene propylene rubber. The fourth rubber sheet 5D may contain one or more selected from the group consisting of a carbon fiber, a metal mesh, and a filler to adjust the Young's modulus and a linear expansion coefficient of the fourth rubber sheet 5D.

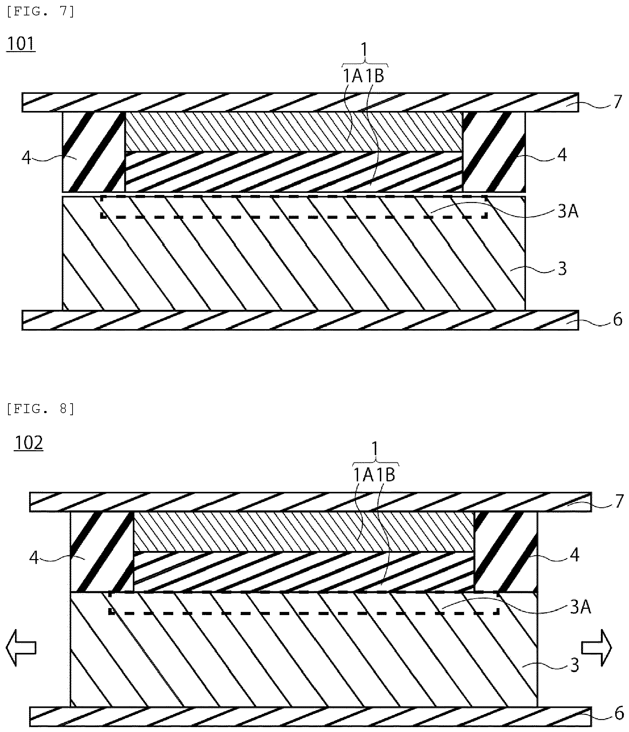

Hereinafter, a manufacturing method for the membrane electrode assembly 100 will be described with reference to process schematic diagrams illustrated in FIGs. 7 to 11. The manufacturing method for the membrane electrode assembly 100 with reference to process schematic diagrams illustrated in FIGs. 7 to 11 is part of a manufacturing method for the membrane electrode assembly 100. A laminating method that laminates the electrolyte membrane 3 and the first electrode 1 using the first seal 4 includes a step of facing the electrolyte membrane 3 (the electrolyte membrane 3 with which the second electrode 2 is laminated is also abbreviated as the electrolyte membrane 3 in the process of laminating the electrolyte membrane 3 and the second electrode 2) provided on a first press plate 6 to the first seal 4 having the first opening 4A and the first electrode 1 housed in the first opening 4A which are provided on a second press plate 7, a step of laminating the faced member by heating, a step of cooling the heated and laminated member, a step of detaching the first press plate 6 and the second press plate 7, and a step of peeling off the first seal 4 that is an optional step. The steps of laminating the first seal 4 can be diverted to laminating the second seal 5.

The member 101 illustrated in the process schematic diagram of FIG. 7 is related the step of facing the electrolyte membrane 3 provided on a first press plate 6 to the first seal 4 having the first opening 4A and the first electrode 1 housed in the first opening 4A which are provided on a second press plate 7. The member 101 includes the electrolyte membrane 3 provided on the first press plate 6 and the first electrode 1 provided on the second press plate 7. The first electrode 1 is housed in the first opening 4A of the first seal 4. The electrolyte membrane 3 faces the first seal 4 having the first opening 4A and the first electrode 1 housed in the first opening 4A.

The member 102 illustrated in the process schematic diagram of FIG. 8 is related to the step of laminating the faced member 101 by heating. The first electrode 1 and the first seal 4 is laminated with the electrolyte membrane 3 so that the member 101 illustrated in FIG. 7 becomes the member 102 illustrated in the process schematic diagram of FIG. 8. In the laminating, for example, the member is heated at 120 [°C] or more and 180[°C] or less and pressed at 10[kg / cm²] or more and 30 [kg / cm²] or less for 1 minute or more and 10 minutes or less. The pressurization is preferably performed in air or an inert atmosphere. The electrolyte membrane 3 attempts to expand in the arrow direction of FIG. 8 due to the heating and pressing but the first seal 4 reduces the expansion on laminating the first electrode 1 with the electrolyte membrane 3.

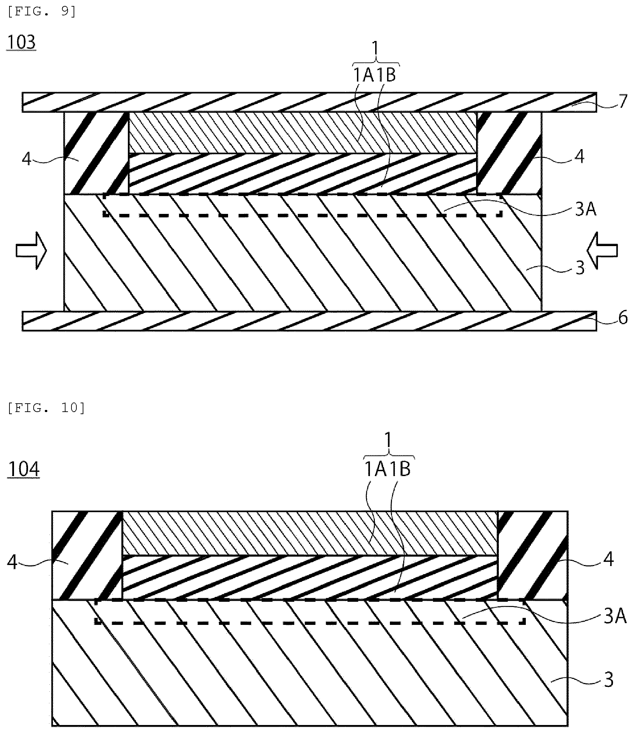

The member 103 illustrated in the process schematic diagram of FIG. 9 is related to the step of cooling the heated and laminated member 102. Thereafter, the member 103 is cooled. When the member 103 is kept pressurized and cooled, the electrolyte membrane 3 attempts to contract in the arrow direction shown for the member 103 illustrated in the process schematic diagram of FIG. 9. Since the first seal 4 is used for both heating and cooling, the contraction is small during cooling due to the small expansion of the electrolyte membrane 3 during heating. Additionally, volume change is reduced in the process from heated-pressurized to cooled-pressurized since the first seal reduces contractive deformation of the electrolyte membrane 3.

The member 104 illustrated in the process schematic diagram of FIG. 10 is related to the step of detaching the first press plate 6 and the second press plate 7. After the cooling, the first press plate 6 and the second press plate 7 are detached and the member 104 illustrated in the process schematic diagram of FIG. 10 is obtained.

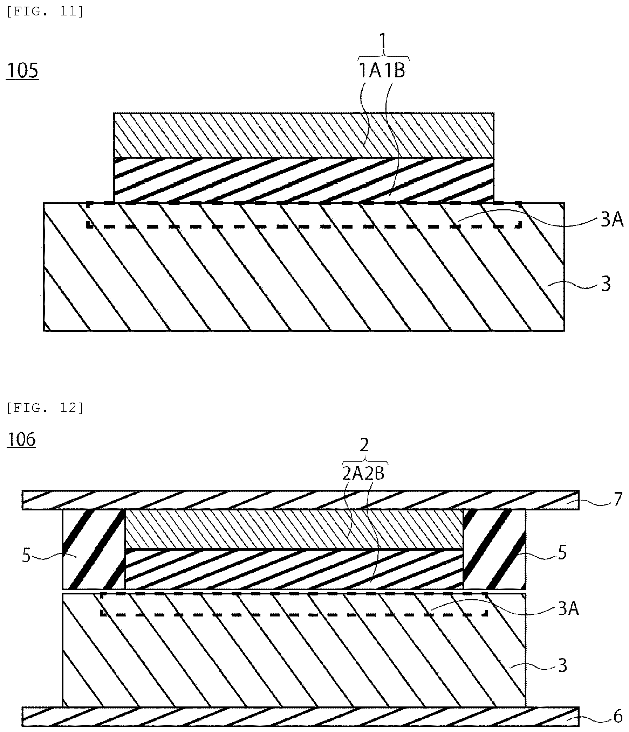

The member 105 illustrated in the process schematic diagram of FIG. 11 is related to the step of peeling off the first seal 4. The first seal 4 in the member 104 in which the first press plate 6 and the second press plate 7 are detached is peeled off. The first seal 4 is peeled off in air or liquid. The liquid used for peeling off the first seal 4 is, for example, preferably water. Additionally, other treatment to facilitate peeling off the first seal 4 may be processed.

The membrane electrode assembly 100 having the first seal 4 can be used for the electrochemical cell 200 or a stack 300. The membrane electrode assembly 100 in which the first seal 4 is peeled off can be used for the electrochemical cell 200 or a stack 300. The first seal 4 may be peeled off and a gasket may be provided during a process of making MEA. The member 105 illustrated in the process schematic diagram of FIG. 11 is obtained from the member 104 of FIG. 10 after the peeling process in air or liquid.

Since the volume change of the electrolyte membrane 3 is reduced in the process from heated-pressurized to cooled-pressurized, an occurrence of wrinkling in the electrolyte membrane 3 is reduced. When wrinkles occur in the electrolyte membrane 3, hydrogen is easy to crossover to the anode from gaps caused by the wrinkles. Then, the possibility of the hydrogen concentration on the anode side increases. Since the first seal 4 is joined with the peripheral portion of the electrolyte membrane 3, both the hydrogen leakage and the hydrogen cross over are reduced.

Hereinafter, a manufacturing method for the membrane electrode assembly 100 will be described with reference to process schematic diagrams illustrated in FIGs. 12 to 16. The manufacturing method for the membrane electrode assembly 100 with reference to process schematic diagrams illustrated in FIGs. 12 to 16 is part of a manufacturing method for the membrane electrode assembly 100. A laminating method that laminates the electrolyte membrane 3 and the second electrode 2 using the second seal 5 includes a step of facing the electrolyte membrane 3 (the electrolyte membrane 3 with which the first electrode 1 is laminated is also abbreviated as the electrolyte membrane 3 in the process of laminating the electrolyte membrane 3 and the first electrode 1) provided on a first press plate 6 to the second seal 5 having the second opening 5A and the second electrode 2 housed in the second opening 5A which are provided on a second press plate 7, a step of laminating the faced member by heating, a step of cooling the heated and laminated member, a step of detaching the first press plate 6 and the second press plate 7, and a step of peeling off the second seal 5 that is an optional step.

The member 106 illustrated in the process schematic diagram of FIG. 12 is related the step of facing the electrolyte membrane 3 provided on a first press plate 6 to the second seal 5 having the second opening 5A and the second electrode 2 housed in the second opening 5A which are provided on a second press plate 7. The member 106 includes the electrolyte membrane 3 provided on the first press plate 6 and the second electrode 2 provided on the second press plate 7. The second electrode 2 is housed in the second opening 5A of the second seal 5. The electrolyte membrane 3 faces the second seal 5 having the second opening 5A and the second electrode 2 housed in the second opening 5A.

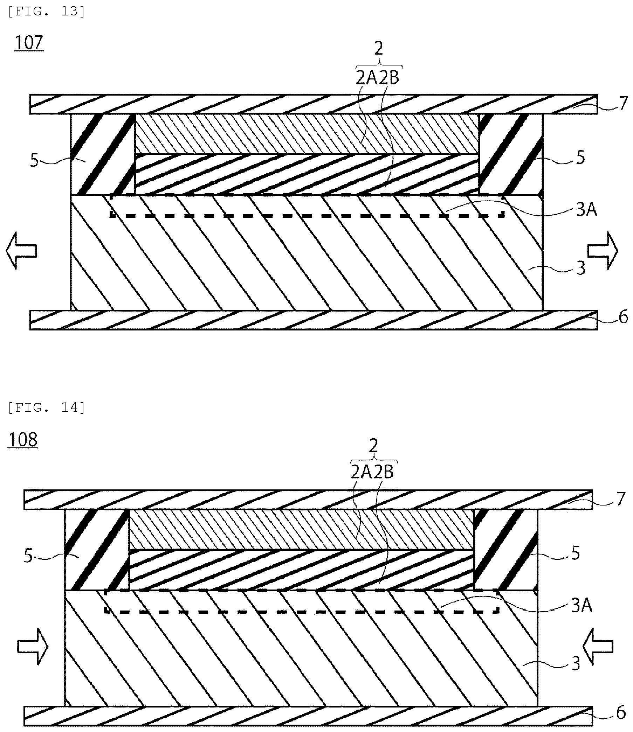

The member 107 illustrated in the process schematic diagram of FIG. 13 is related to the step of laminating the faced member 106 by heating. The second electrode 2 and the second seal 5 is laminated with the electrolyte membrane 3 so that the member 106 illustrated in FIG. 12 becomes the member 107 illustrated in the process schematic diagram of FIG. 13. In the laminating, for example, the member is heated at 120 [°C] or more and 180 [°C] or less and pressed at 10[kg / cm²] or more and 30 [kg / cm²] or less for 1 minute or more and 10 minutes or less. The pressurization is preferably performed in air or an inert atmosphere. The electrolyte membrane 3 attempts to expand in the arrow direction of FIG. 13 due to the heating and pressing but the second seal 5 reduces the expansion on laminating the second electrode 2 with the electrolyte membrane 3.

The member 108 illustrated in the process schematic diagram of FIG. 14 is related to the step of cooling the heated and laminated member 107. Thereafter, the member 108 is cooled. When the member 108 is kept pressurized and cooled, the electrolyte membrane 3 attempts to contract in the arrow direction shown for the member 108 illustrated in the process schematic diagram of FIG. 14. Since the second seal 5 is used for both heating and cooling, the contraction is small during cooling due to the small expansion of the electrolyte membrane 3 during heating. Additionally, volume change is reduced in the process from heated-pressurized to cooled-pressurized since the second seal 5 reduces contractive deformation of the electrolyte membrane 3.

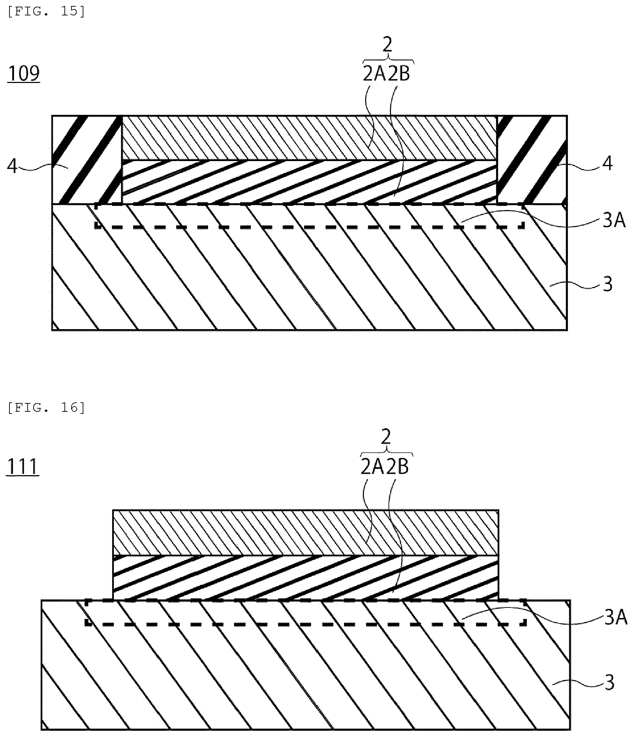

The member 109 illustrated in the process schematic diagram of FIG. 15 is related to the step of detaching the first press plate 6 and the second press plate 7. After the cooling, the first press plate 6 and the second press plate 7 are detached and the member 109 illustrated in the process schematic diagram of FIG. 10 is obtained.

The member 111 illustrated in the process schematic diagram of FIG. 16 is related to the step of peeling off the second seal 5. The second seal 5 in the member 109 in which the first press plate 6 and the second press plate 7 are detached is peeled off. The second seal 5 is peeled off in air or liquid. The liquid used for peeling off the second seal 5 is, for example, preferably water. Additionally, other treatment to facilitate peeling off the second seal 5 may be processed.

The membrane electrode assembly 100 having the second seal 5 can be used for the electrochemical cell 200 or a stack 300. The membrane electrode assembly 100 in which the second seal 5 is peeled off can be used for the electrochemical cell 200 or a stack 300. The second seal 5 may be peeled off and a gasket may be provided during a process of making MEA. The member 111 illustrated in the process schematic diagram of FIG. 16 is obtained from the member 109 of FIG. 15 after the peeling process in air or liquid.

Since the volume change of the electrolyte membrane 3 is reduced in the process from heated-pressurized to cooled-pressurized, an occurrence of wrinkling in the electrolyte membrane 3 is reduced. When wrinkles occur in the electrolyte membrane 3, hydrogen is easy to crossover to the anode from gaps caused by the wrinkles. Then, the possibility of the hydrogen concentration on the anode side increases. Since the second seal 5 is joined with the peripheral portion of the electrolyte membrane 3, both the hydrogen leakage and the hydrogen cross over are reduced.

When the second seal 5 is used on the second electrode 2 side, the second electrode 2 may be laminated with the electrolyte membrane 3 after laminating the first electrode 1 with the electrolyte membrane 3, the first electrode 1 may be laminated with the electrolyte membrane 3 after laminating the second electrode 2 with the electrolyte membrane 3, or the first electrode 1 and the second electrode 2 are laminated with the electrolyte membrane 3 at the same time. When the second seal 5 is not used second electrode 2, in view of reducing the wrinkles, it is preferable that the second electrode 2 is laminated with the electrolyte membrane 3 after laminating the first electrode 1 with the electrolyte membrane 3. After the laminating, the second seal 5 may be also peeled off and a gasket may be provided during a process of making MEA.

Since the occurrence of wrinkles is reduced in laminating, wrinkles are difficult to occur after peeling off the seal. When the first seal 4 and the second seal 5 are peeled off, in view of making it to easier to peel the seal, is it preferable that W1 < W0 < W2, L1 < L0 < L2, W1 < W11 < W2, and L1 < L11 < L2 are satisfied.

Since the electrolyte membrane 3 which is used industrial hydrogen generating apparatus is large, for example, with each side measuring 10 [cm] or more, the effect of expansion and contraction of the electrolyte membrane 3 are tend to be large. The membrane electrode assembly 100 of the embodiment can reduce expansion and contraction of the electrolyte membrane 3 and the occurrence of wrinkles even if the membrane electrode assembly 100 is large. The membrane electrode assembly 100 of the embodiment contribute to improved reliability.

### (Second Embodiment)

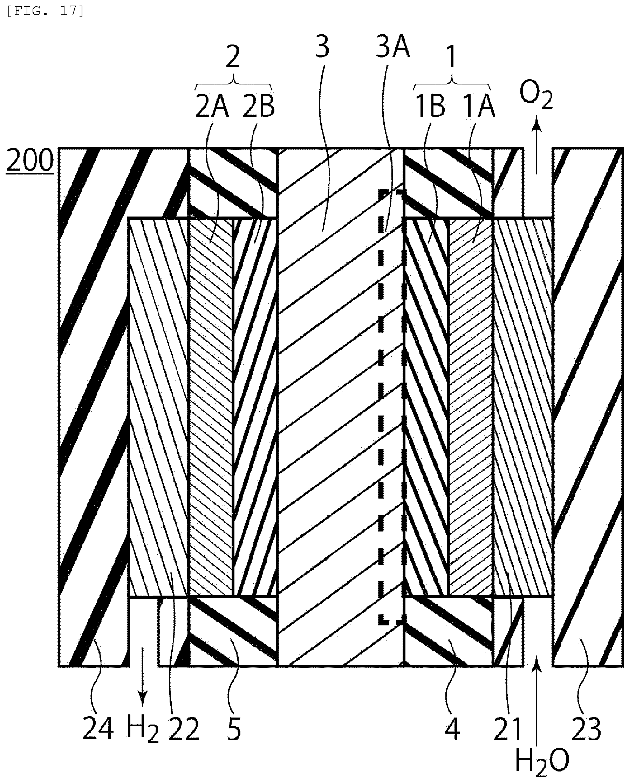

The second embodiment relates to an electrochemical cell. A cross-sectional diagram of the electrochemical cell according to the second embodiment is illustrated in FIG. 17. Hereinafter, the electrochemical cell will be described for use, for example, water electrolysis, but hydrogen can be generated by decomposing ammonia other than water.

The electrochemical cell 200 according to the second embodiment as illustrated in FIG. 17 includes the first electrode (anode) 1, the second electrode (cathode) 2, the electrolyte membrane 3, a anode feeder 21, a cathode feeder 22, a separator 23, and a separator 24. When the the first seal 4 and the second seal 5 are laminated with the electrolyte membrane 3 of the membrane electrode assembly 100 of the electrochemical cell 200, the electrochemical cell 200 as illustrated in the schematic diagram of FIG. 17 is used. When the first seal 4 and the second seal 5 are peeled off from the electrolyte membrane 3 of the electrochemical cell 200 illustrated in the schematic diagram of FIG. 17, the first seal 4 and the second seal 5 can be replaced with gaskets.

It is preferable to use the membrane electrode assembly 100 in which the electrolyte membrane 3 is joined with the first electrode (anode) 1 the second electrode (cathode) 2. The anode feeder 21 and the cathode feeder is not limited as long as it passes gas and water. The anode feeder 21 and the cathode feeder 22 may be integrated with the separator 23 and the separator 24, respectively. Specifically, it is not limited to a separator having a flow passage for a hydrogen source, for example, water or the like and gas or porousness. The electrochemical cell 200 using the membrane electrode assembly 100 according to the embodiment reduces the hydrogen leakage and have high reliability.

In the electrochemical cell 200 of FIG. 17, un-illustrated electrodes are connected to the anode feeder 21 and the cathode feeder 22 and reactions occur at the anode 1 and the cathode 2. Water or the like is supplied to the anode 1 and water is decomposed to proton, oxygen, and electron at the anode 1. The support and the feeder are porous materials, and the porous material works as a passage board. The formed water and un-reacted water are extracted, and proton and electron are used for a cathode reaction. The cathode reaction is that proton and electron react, and hydrogen is formed. Hydrogen and/or oxygen is used as a fuel-cell fuel and others.

### (Third Embodiment)

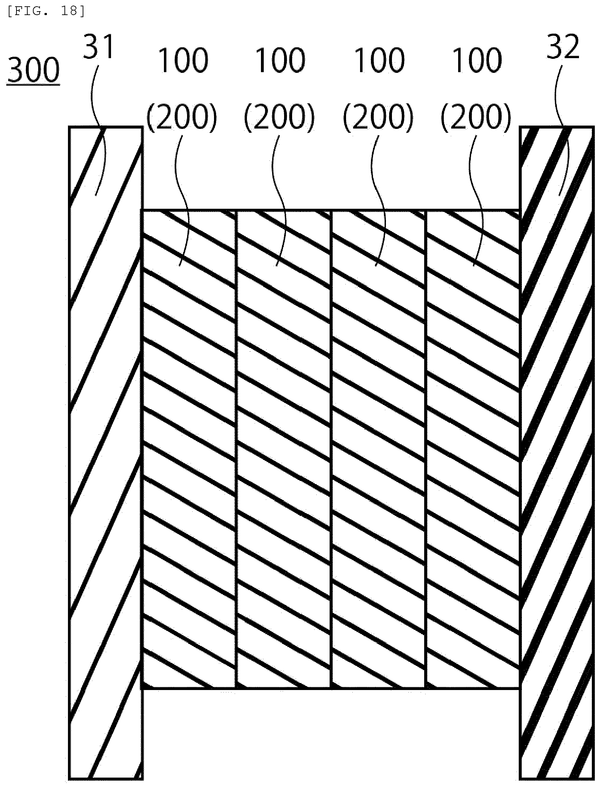

A third embodiment relates to a stack. FIG. 18 illustrate a schematic cross-sectional diagram of stack 300. The stack 300 according to the third embodiment illustrated in FIG. 18 is configured so that two or more of the MEAs 100 or the electrochemical cell 200 are connected in series. Tightening plates 31 and 32 are attached to both ends of MEA or the electrochemical cells 200.

The amount of hydrogen generated in the electrochemical cell 200 composed of a single MEA 200 is small. Therefore, a large amount of hydrogen can be obtained by forming the stack 300 in which two or more of the electrochemical cells are connected in series.

### (Fourth Embodiment)

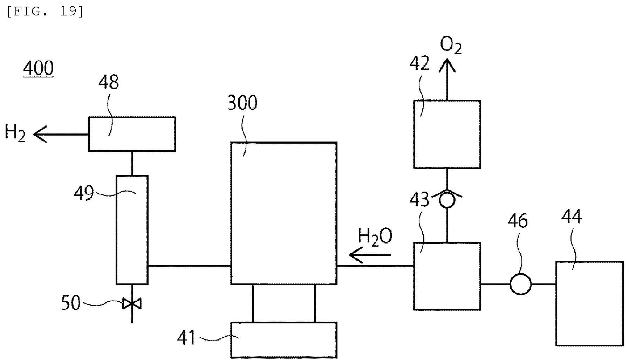

A fourth embodiment relates to an electrolyzer. FIG. 19 illustrates a conceptual diagram of the electrolyzer according to the fourth embodiment. The electrolyzer (hydrogen generating apparatus) 400 uses the electrochemical cell 200 or the stack 300. The electrolyzer of FIG. 19 is used for water electrolysis. The electrolyzer for water electrolysis will be described. When hydrogen is generated from ammonia or others, another apparatus using the membrane electrode assembly 100 and having different configurations is preferable.

As shown in FIG. 19, water electrolysis cells stacked in series are used as the stack 300 for water electrolysis. A power supply 51 is attached to the stack 300 for water electrolysis, and a voltage is applied between the anode and the cathode. A gas-liquid separator 42 for separating generated gas and unreacted water and a mixing tank 43 are connected to the anode side of the stack 300 for water electrolysis and water is sent to the mixing tank 43 by a pump 46 from an ion exchanged water producing apparatus 44 that supplies water for mixing in the mixing tank 43, and water is circulated to the anode through a check valve 47 from the gas-liquid separator 42. Oxygen generated in the anode passes through the gas-liquid separator 42 so that an oxygen gas is obtained. On the other hand, a hydrogen purification device 49 is connected to the cathode side subsequent to a gas-liquid separator 48 to obtain high purity hydrogen. Impurities are discharged via a path having a valve 50 connected to the hydrogen purification device 49. In order to control the operating temperature in a stable manner, it is possible to control the heating of the stack and a mixing tank, the current density during thermal decomposition, and the like.

Hereinafter, examples of embodiments will be described.

### (Example A)

### Anode (the first electrode 1) Production

A titanium un-woven fabric substrate of the thickness of 200 [µm] with a size of 25 [cm] × 25 [cm] is prepared. A sheet layer is formed by the sputtering nickel and iridium on the titanium substrate. Hereinafter, a gap layer is formed by sputtering only nickel. A laminated structure was formed by repeating the sheet layer forming and the gap layer forming for 40 times so that that the loading density of Ir became 0.2 [mg / cm²]. Next, the catalyst structure from which Ni is extracted is obtained by washing with sulfuric acid. A catalyst layer having the electrode was used as the standard cathode of Examples and Comparative Examples.

### Cathode (the second electrode 2) Production

A carbon paper Toray060 (Toray Industries, Inc.) having a carbon layer of the thickness of 200 [µm] with a size of 25 [cm] × 25 [cm] is prepared as a substrate. A catalyst layer having a laminated structure containing gap layers is formed by the sputtering method such that the loading density of a Pt catalyst became 0.1 [mg / cm²] to obtain an electrode having a porous catalyst layer, and an electrode is obtained having the porous catalyst layer. This electrode is used as the standard cathode of Examples and Comparative Examples.

Nation (Chemours) with a size of 30 [cm] × 30 [cm] is as the electrolyte membrane 3 is sprayed with a solution of tetraamine platinum diluted with water to 11 [wt%]. Before the spray, the Nafion115 is masked with tape to meet the impregnation size requirements shown in the table 1. The electrolyte membrane 3 impregnated with Pt particles is obtained by rinsing with pure water after 10 minutes of spraying and boiling in 10 wt% of nitric acid for 1 hour.

**[Table 1]**

| | Electrolyte Membrane Size | Electrode Size | Seal | Pt Impregnation Side | Pt Impregnation Size | Pt Impregnation Amount [mg/cm²] |
|---|---|---|---|---|---|---|
| Exam ple A-1 | 30 × 30 cm | 25 × 25 cm | Anode and Cathode | Anode and Cathode | 29 × 29 cm | 0.1 |
| Example A-2 | 30 × 30 cm | 25 × 25 cm | Anode and Cathode | Anode | 29 × 29 cm | 0.1 |
| Example A-3 | 30 × 30 cm | 25 × 25 cm | Anode and Cathode | Cathode | 29 × 29 cm | 0.1 |
| Example A-4 | 30 × 30 cm | 25 × 25 cm | Anode and Cathode | Anode and Cathode | 28 × 28 cm | 0.1 |
| Example A-5 | 30 × 30 cm | 25 × 25 cm | Anode and Cathode | Anode | 28 × 28 cm | 0.1 |
| Example A-6 | 30 × 30 cm | 25 × 25 cm | Anode and Cathode | Cathode | 28 × 28 cm | 0.1 |
| Example A-7 | 30 × 30 cm | 25 × 25 cm | Anode and Cathode | Anode and Cathode | 25 × 25 cm | 0.1 |
| Example A-8 | 30 × 30 cm | 25 × 25 cm | Anode and Cathode | Anode | 25 × 25 cm | 0.1 |
| Example A-9 | 30 × 30 cm | 25 × 25 cm | Anode and Cathode | Cathode | 25 × 25 cm | 0.1 |
| Example A-10 | 30 × 30 cm | 25 × 25 cm | Anode and Cathode | Anode and Cathode | 24 × 24 cm | 0.1 |
| Example A-11 | 30 × 30 cm | 25 × 25 cm | Anode and Cathode | Anode | 24 × 24 cm | 0.1 |
| Example A-12 | 30 × 30 cm | 25 × 25 cm | Anode and Cathode | Cathode | 24 × 24 cm | 0.1 |
| Example A-13 | 30 × 30 cm | 25 × 25 cm | Anode and Cathode | Anode and Cathode | 20 × 20 cm | 0.1 |
| Example A-14 | 30 × 30 cm | 25 × 25 cm | Anode and Cathode | Anode | 20 × 20 cm | 0.1 |
| Example A-15 | 30 × 30 cm | 25 × 25 cm | Anode and Cathode | Cathode | 20 × 20 cm | 0.1 |
| Example A-16 | 30 × 30 cm | 25 × 25 cm | Anode | Anode | 20 × 20 cm | 0.1 |
| Example A-17 | 30 × 30 cm | 25 × 25 cm | Cathode | Anode | 20 × 20 cm | 0.1 |
| Comparative Example A-1 | 30 × 30 cm | 25 × 25 cm | Anode and Cathode | Anode and Cathode | 30 × 30 cm | 0.1 |
| Comparative Example A-2 | 30 × 30 cm | 25 × 25 cm | Anode and Cathode | Anode | 30 × 30 cm | 0.1 |
| Comparative Example A-3 | 30 × 30 cm | 25 × 25 cm | Anode and Cathode | Cathode | 30 × 30 cm | 0.1 |
| Comparative Example A-4 | 30 × 30 cm | 25 × 25 cm | Anode and Cathode | Anode and Cathode | 0 × 0 cm | 0.1 |
| Comparative Example A-5 | 30 × 30 cm | 25 × 25 cm | none | Anode and Cathode | 30 × 30 cm | 0.1 |
| Comparative Example A-6 | 30 × 30 cm | 25 × 25 cm | none | Anode | 30 × 30 cm | 0.1 |
| Comparative Example A-7 | 30 × 30 cm | 25 × 25 cm | none | Cathode | 30 × 30 cm | 0.1 |
| Comparative Example A-8 | 30 × 30 cm | 25 × 25 cm | none | Anode and Cathode | 29 × 29 cm | 0.1 |
| Comparative Example A-9 | 30 × 30 cm | 25 × 25 cm | none | Anode | 29 × 29 cm | 0.1 |
| Comparative Example A-10 | 30 × 30 cm | 25 × 25 cm | none | Cathode | 29 × 29 cm | 0.1 |
| Comparative Example A-11 | 30 × 30 cm | 25 × 25 cm | none | Anode and Cathode | 24 × 24 cm | 0.1 |
| Comparative Example A-12 | 30 × 30 cm | 25 × 25 cm | none | Anode | 24 × 24 cm | 0.1 |
| Comparative Example A-13 | 30 × 30 cm | 25 × 25 cm | none | Cathode | 24 × 24 cm | 0.1 |

The first seal 4 and the second seal 5 with a size of 30 [cm] × 30 [cm] are integrated seals which include laminated layers of a EPDM rubber (ethylene propylene diene rubber) sheet for upper layer , a PET film for middle layer, and a EPDM rubber (ethylene propylene diene rubber) sheet for lower layer. The thickness of the first seal 4 and the second seal 5 is thinner than that of the cathode 2 and the anode 1. In Examples, the seal of the thickness of 160 [µm] is used. Since the first seal 4 and the second seal 5 are provided on the peripheral portion of the anode 1 and the cathode 2, the center portion of first seal 4 and the second seal 5 is cut to match the size of electrode. The first seal 4 having the first opening 4A and the peripheral portion and the second seal 5 having the second opening 5A and the peripheral portion are used.

The press plate include, from closest to the electrode, a Kapton sheet of the thickness of 0.1 [mm] with a size of 32 [cm] × 32 [cm], a silicone rubber sheet of the thickness of 2 [mm] with a size of 32 [cm] × 32 [cm] and a stainless plate of the thickness of 0.1 [mm] with a size of 32 [cm] × 32 [cm]. Prepare 2 sets of this combination are prepared and sandwiched between the anode side and the cathode side.

MEA integration is processed with a hot press equipment. First, the cathode is mounted on the press sheet on the Kapton sheet side, and the seal is mounted on the peripheral portion. The electrolyte membrane 3 impregnated with Pt particles is mounted on it, and the anode and seal on the peripheral side is mounted. Finally, the press plate is mounted so that the Kapton sheet faces the anode.

Then, it is placed to the hot press equipment, and pressed at 160 [°C] and 20 [kg / cm²] for 3 minutes. Thereafter, MEA is obtained after pressing and cooling at 160 [°C] and 20 [kg / cm²].

From the appearance at this time, the degree of wrinkles of the membrane are evaluated based on the following criteria. The results are shown in Table 2.
A: Completely wrinkleless
B: Wavy wrinkles
C: 1 to 3 of folded wrinkles
D: 4 or more of folded wrinkles

**[Table 2]**

| | Wrinkles | Atmospheric Pressure | Atmospheric Pressure | 1MPa | 5 Mpa | Evaluation |
|---|---|---|---|---|---|---|
| | | Hydrogen Crossover Amount (ppm) | Hydrogen Leakage Amount (ppm) | Hydrogen Leakage Amount (ppm) | Hydrogen Leakage Amount (ppm) | |
| Example A-1 | B | 200 | 400 | 600 | 1000 | A |
| Example A-2 | B | 200 | 400 | 600 | 1000 | A |
| Example A-3 | B | 2000 | 2500 | 4600 | 8800 | A |
| Example A-4 | A | 200 | 350 | 500 | 900 | A |
| Example A-5 | A | 200 | 350 | 500 | 900 | A |
| Example A-6 | A | 2000 | 2500 | 4600 | 8800 | A |
| Example A-7 | A | 200 | 300 | 400 | 600 | A |
| Example A-8 | A | 200 | 300 | 400 | 600 | A |
| Example A-9 | A | 2000 | 2500 | 4600 | 8800 | A |
| Example A-10 | A | 200 | 300 | 400 | 600 | A |
| Example A-11 | A | 200 | 300 | 400 | 600 | A |
| Example A-12 | A | 2000 | 2500 | 4600 | 8800 | A |
| Example A-13 | A | 400 | 500 | 600 | 1000 | A |
| Example A-14 | A | 400 | 500 | 600 | 1000 | A |
| Example A-15 | A | 2500 | 2700 | 6000 | 9800 | A |
| Example A-16 | A | 400 | 500 | 600 | 1000 | A |
| Example A-17 | A | 400 | 500 | 600 | 1000 | A |
| Comparative Example A-1 | C | 200 | 1000 | 5000 | 30000 | B |
| Comparative Example A-2 | C | 200 | 1000 | 5000 | 30000 | B |
| Comparative Example A-3 | C | 2000 | 3000 | 9000 | 40000 | B |
| Comparative Example A-4 | A | 10000 | 10000 | 30000 | 80000 | C |
| Comparative Example A-5 | D | 200 | 40000 | 200000 | - | C |
| Comparative Example A-6 | D | 200 | 40000 | 200000 | - | C |
| Comparative Example A-7 | D | 2000 | 41000 | 200000 | - | C |
| Comparative Example A-8 | D | 200 | 40000 | 200000 | - | C |
| Comparative Example A-9 | D | 200 | 40000 | 200000 | - | C |
| Comparative Example A-10 | D | 2000 | 41000 | 200000 | - | C |
| Comparative Example A-11 | D | 300 | 40000 | 200000 | - | C |
| Comparative Example A-12 | D | 300 | 40000 | 200000 | - | C |
| Comparative Example A-13 | D | 2000 | 41000 | 200000 | - | C |

### <Single Cell Production>

The obtained MEA and gaskets are set between the two of separators having flow passage to produce a PEEC single cell (electrochemical cell). EPDM sheets of the thickness of 180[um] are set to the anode and the cathode respectively. Additionally, a back pressure valve is attached on the exit of the separators having flow passage on hydrogen side, and internal pressure can be increased.

Next MEA of Example A and Comparative Example A is evaluated. Continuously operation is performed at 80 [°C] and a current density of 2 [A / cm²]. The performance is evaluated from gas chromatograph by measuring the amount of the hydrogen cross-leak as hydrogen concentration in oxygen from the anode to the cathode when pressure on hydrogen side is increase by the back pressure valve. In addition, the amount of the hydrogen leakage is measured by subtracting the amount of obtained hydrogen from the amount of generated hydrogen calculated from the applied current. The amount of the hydrogen leakage is sum of the amount of hydrogen moved from the cathode to the anode because of the hydrogen cross-leak, the amount of hydrogen which is converted to water by reconnected with oxygen contained in the anode, and the amount of hydrogen which is leaked from clearance of the gasket. However, the equipment cannot measure when the concentration is more than 20 [%].

The degree of the amount of the hydrogen leakage is evaluated based on the following criteria. The results are shown in Table 2.
A: 10000 ppm or less at 5 MPa
B: 400000 ppm or less (more than 10000 ppm) at 5 MPa
C: more than 400000 ppm at 5 MPa

As can be seen from Table 2, crossover and the hydrogen leakage are reduced because the wrinkles are reduced when the seal is used, and the impregnated region of Pt is smaller than the electrolyte membrane 3. Additionally, the impregnation with Pt on both surfaces or the anode surface is the mostly effective for reducing hydrogen crossover. On the other hand, the formation of the wrinkles and the hydrogen leakage toward outside is not significantly related to impregnated surface of Pt.

When the size of Pt impregnation Pt increases, the amount of the hydrogen leakage tends to increase. This teaches that the sealing is not sufficient because Pt decreases the coefficient of friction at peripheral potion. The leak amount is little. Therefore, this result is not a problem regarding the hydrogen leakage.

In Comparative Examples A-1 ~ A-3, the seal is used, and the size of the Pt impregnated portion is the same as that of the electrolyte membrane 3. In this case, the wrinkles are easy to occur, and the amount of the hydrogen leakage increases greatly when it pressed. The gasket become loose because of wrinkles of the electrolyte membrane 3, and hydrogen leaks to outside.

In Comparative Examples A-4, Pt is not impregnated. In this case, the electrolyte membrane 3 has no wrinkles, but the amount of the hydrogen crossover increases.

In Comparative Examples A-4 ~ A-7, the seal is not used. The folded wrinkles occurred in the electrolyte membrane 3, and hydrogen leaks to outside.

In Comparative Examples A-4 ~ A-7, the size of the Pt impregnation is smaller than that of the electrolyte membrane 3 but the seal is not used. The wrinkles occur, and hydrogen leaks to outside.

### (Example B)

In Example B, MEA is manufactured under the same conditions as the Example A-1 except that the amount of Pt impregnation is changed. The amount of Pt impregnation and evaluation results of Example B-1 ~ B-4 are shown in Table 3.

**[Table 3]**

| | Pt Impregnation Amount [mg/cm²] | Wrinkles | Atmospheric Pressure | Atmospheric Pressure | 1 MPa | 5 Mpa | Evaluation |
|---|---|---|---|---|---|---|---|
| | | | Hydrogen Crossover Amount (ppm) | Hydrogen Leakage Amount (ppm) | Hydrogen Leakage Amount (ppm) | Hydrogen Leakage Amount (ppm) | |
| Example B 1 | 0.2 | B | 200 | 400 | 600 | 1000 | A |
| Example B-2 | 0.3 | B | 200 | 400 | 600 | 1000 | A |
| Example B-3 | 0.5 | B | 150 | 400 | 700 | 1300 | A |
| Example B-4 | 1 | B | 100 | 350 | 800 | 2000 | A |

In Example B, the amount of the hydrogen crossover decreases slightly when the amount of Pt is changed, but the amount of the hydrogen leakage increases. The sealing is not sufficient because Pt decreases the coefficient of friction at peripheral portion. The leak amount is little. Therefore, this result is not a problem regarding the hydrogen leakage.

### (Comparative Example C)

In Comparative Examples, a seal including only EPBM rubber, a seal including only PET film, or a two-layered seal including EPDM rubber and PET film is used and evaluated. MEA is manufactured under the same conditions as the Example A-1 except that the seal is changed. The wrinkles and the amount of the hydrogen leakage when the seals of Comparative Example are used is evaluated as same as Example A-1. The results are shown in Table 4.

**[Table 4]**

| | Seal (Electrolyte Membrane) | Wrinkles | Atmospheric Pressure | Atmospheric Pressure | 1 MPa | 5 Mpa | Evaluation |
|---|---|---|---|---|---|---|---|
| | | | Hydrogen Crossover Amount (ppm) | Hydrogen Leakage Amount (ppm) | Hydrogen Leakage Amount (ppm) | Hydrogen Leakage Amount (ppm) | |
| Comparative Example C-1 | EPDM Only | D | 200 | 40000 | 200000 | - | C |
| Comparative Example C-2 | PET Only | D | 200 | 40000 | 200000 | - | C |
| Comparative Example C-3 | EPDM+PET Film (PET Film on Electrolyte Membrane Side) | D | 200 | 40000 | 200000 | - | C |
| Comparative Example C-4 | EPDM+PET Film (EPDM Film on Electrolyte Membrane Side) | D | 200 | 40000 | 200000 | - | C |

When the seal having two-layered structure or single layer structure, it is not easy to reduce the wrinkles of the electrolyte membrane 3 and the hydrogen leakage.

Some elements are expressed only by element symbols thereof.

Hereinafter, clauses of embodiments are additionally noted.

### [Clause 1]

A membrane electrode assembly comprising:
a first electrode;
a second electrode;
an electrolyte membrane provided between the first electrode and the second electrode; and
a first seal provided on a peripheral portion of the first electrode, having a first opening, housing the first electrode in the first opening, and being contact with the electrolyte membrane or the first seal and a second seal provided on a peripheral portion of the second electrode, having a second opening, housing the second electrode in the second opening, and being contact with the electrolyte membrane.

### [Clause 2]

The membrane electrode assembly according to clause 1, wherein
the electrolyte membrane includes a noble metal region on the first electrode side containing noble metal particles containing one or more selected from the group consisting of Pt, Re, Rh, Ir, Pd, and Ru.

### [Clause 3]

The membrane electrode assembly according to clause 2, wherein,
when a width of the electrolyte membrane is W1 and a width of the noble metal region is W2, W1 - W2 is 0.01 times or more and 0.98 times or less of W1, and
when a length of the electrolyte membrane is L1 and a length of the noble metal region is L2, L1 - L2 is 0.01 times or more and 0.98 times or less of W1.

### [Clause 4]

The membrane electrode assembly according to clause 2 or 3, wherein,
when a width of the electrolyte membrane is W1, a width of the noble metal region is W2, and a width of the first electrode is W3, W1 > W2 > W3 is satisfied, and
when a length of the electrolyte membrane is L1, a length of the noble metal region is L2, and a length of the first electrode is L3, L1 > L2 > L3 is satisfied.

### [Clause 5]

The membrane electrode assembly according to any one of clauses 2 to 4, wherein,
when a width of the electrolyte membrane is W1, a width of the noble metal region is W2, a length of the electrolyte membrane is L1, and a length of the noble metal region is L2, W2 is 0.8 times or more and less than 1.0 times of W1,
L2 is 0.8 times or more and less than 1.0 times of L1, and
the noble metal region on the first electrode side is entirely surrounded by a region which is not the noble metal region.

### [Clause 6]

The membrane electrode assembly according to any one of clauses 1 to 5, wherein
the first seal includes a first rubber sheet, a first resin sheet, and a second rubber sheet,
the first rubber sheet, the first resin sheet, and the second rubber sheet are stacked,
the first resin sheet is provided between the first rubber sheet and the second rubber sheet,
the second seal includes a third rubber sheet, a second resin sheet, and a fourth rubber sheet,
the third rubber sheet, the second resin sheet, and the fourth rubber sheet are stacked, and
the second resin sheet is provided between the third rubber sheet and the fourth rubber sheet,

### [Clause 7]

The membrane electrode assembly according to any one of clauses 1 to 6, wherein
a Young's modulus of the first seal within a range of 5 [°C] or more and 100 [°C] or less is 0.001 [GPa] or more and 5 [GPa] or less, and
a Young's modulus of the second seal within a range of 5 [°C] or more and 100 [°C] or less is 0.001 [GPa] or more and 5 [GPa] or less.

### [Clause 8]

The membrane electrode assembly according to any one of clauses 1 to 7, wherein
the first seal includes a first rubber sheet, a first resin sheet, and a second rubber sheet,
the first rubber sheet, the first resin sheet, and the second rubber sheet are stacked,
the first resin sheet is provided between the first rubber sheet and the second rubber sheet,
an inside surface of the first seal is in contact with a side surface of the first electrode,
a surface of the first rubber sheet facing to the electrolyte membrane is in contact with surface of the electrolyte membrane,
an inside surface of the resin sheet is in contact with the side surface of the first electrode,
the second seal includes a third rubber sheet, a second resin sheet, and a fourth rubber sheet,
the third rubber sheet, the second resin sheet, and the fourth rubber sheet are stacked, and
the second resin sheet is provided between the third rubber sheet and the fourth rubber sheet,
an inside surface of the second seal is in contact with a side surface of the second electrode,
a surface of the third rubber sheet facing to the electrolyte membrane is in contact with surface of the electrolyte membrane,
the inside surface of the resin sheet is in contact with the side surface of the second electrode.

### [Clause 9]

The membrane electrode assembly according to any one of clauses 2 to 5, wherein
the first seal is in contact with a region of the electrolyte membrane where the noble metal region does not exist.

### [Clause 10]

The membrane electrode assembly according to any one of clauses 2 to 5 and 9, wherein
the first seal is in contact with a region of the electrolyte membrane where the noble metal region does not exist, and
the first seal is in contact with a region of the electrolyte membrane where the noble metal region exists.

### [Clause 11]

The membrane electrode assembly according to any one of clauses 1 to 10, wherein
the first electrode includes a substrate and a catalyst layer,
the amount of metal per area of the catalyst layer is 0.02 [mg / cm²] or more and 1.0 [mg / cm²] or less, and
a porous ratio of the catalyst layer is 10 [%] or more and 90 [%] or less.

### [Clause 12]

The membrane electrode assembly according to any one of clauses 1 to 11, wherein,
when a width of the electrolyte membrane is W1, and a width of the first electrode is W3, W1- W3 satisfies 0.01 times or more and 0.2 times or less of W1, and
when a length of the electrolyte membrane is L1 and a length of the first electrode is L3, L1 - L3 satisfies 0.01 times or more and 0.2 times or less of L1.

### [Clause 13]

The membrane electrode assembly according to any one of clauses 1 to 12, wherein,
when a width of the electrolyte membrane is W1, and a width of the second electrode is W4, W1- W4 satisfies 0.01 times or more and 0.2 times or less of W1, and
when a length of the electrolyte membrane is L1 and a length of the second electrode is L4, L1 - L4 satisfies 0.01 times or more and 0.2 times or less of L1.

### [Clause 14]

A laminating method comprising;
facing an electrolyte membrane provided on a first press plate to a first seal having a first opening and a first electrode housed in the first opening which are provided on a second press plate,
laminating the faced member by heating,
cooling the heated and laminated member,
detaching the first press plate and the second press plate, and
peeling off the first seal that is optional.

### [Clause 15]

A laminating method comprising;
facing an electrolyte membrane provided on a first press plate to a second seal having a second opening and a second electrode housed in the second opening which are provided on a second press plate,
laminating the faced member by heating,
cooling the heated and laminated member,
detaching the first press plate and the second press plate, and
peeling off the second seal that is optional.

### [Clause 16]

The laminating method according to clause 14 or 15, wherein
the first seal includes a first rubber sheet, a first resin sheet, and a second rubber sheet,
the first rubber sheet, the first resin sheet, and the second rubber sheet are stacked,
the first resin sheet is provided between the first rubber sheet and the second rubber sheet,
an inside surface of the first seal is in contact with a side surface of the first electrode,
a surface of the first rubber sheet facing to the electrolyte membrane is in contact with surface of the electrolyte membrane,
an inside surface of the resin sheet is in contact with the side surface of the first electrode,
the second seal includes a third rubber sheet, a second resin sheet, and a fourth rubber sheet,
the third rubber sheet, the second resin sheet, and the fourth rubber sheet are stacked, and
the second resin sheet is provided between the third rubber sheet and the fourth rubber sheet,
an inside surface of the second seal is in contact with a side surface of the second electrode,
a surface of the third rubber sheet facing to the electrolyte membrane is in contact with surface of the electrolyte membrane,
the inside surface of the resin sheet is in contact with the side surface of the second electrode.

### [Clause 17]

An electrochemical cell comprising;
the membrane electrode assembly according to any one of clauses 1 to 13, wherein,
the first electrode is an anode.

### [Clause 18]

A stack comprising;
the membrane electrode assembly according to any one of clauses 1 to 13, wherein,
the first electrode is an anode.

### [Clause 19]

An electrolyzer comprising;
the stack according to clause 18, wherein,
the first electrode is an anode or a cathode.

While certain embodiments have been described, these embodiments have been presented by way of example only, and are not intended to limit the scope of the inventions. Indeed, the novel embodiments described herein, for example, PEMEC as a water electrolysis cell may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A membrane electrode assembly comprising:
a first electrode;
a second electrode;
an electrolyte membrane provided between the first electrode and the second electrode; and
a first seal provided on a peripheral portion of the first electrode, having a first opening, housing the first electrode in the first opening, and being in contact with the electrolyte membrane or the first seal and a second seal provided on a peripheral portion of the second electrode, having a second opening, housing the second electrode in the second opening, and being in contact with the electrolyte membrane.

2. The membrane electrode assembly according to claim 1, wherein
the electrolyte membrane includes a noble metal region on the first electrode side containing noble metal particles containing one or more selected from the group consisting of Pt, Re, Rh, Ir, Pd, and Ru.

3. The membrane electrode assembly according to claim 2, wherein,
when a width of the electrolyte membrane is W1 and a width of the noble metal region is W2, W1 - W2 is 0.01 times or more and 0.98 times or less of W1, and
when a length of the electrolyte membrane is L1 and a length of the noble metal region is L2, L1 - L2 is 0.01 times or more and 0.98 times or less of W1.

4. The membrane electrode assembly according to claim 2 or 3, wherein,
when a width of the electrolyte membrane is W1, a width of the noble metal region is W2, and a width of the first electrode is W3, W1 > W2 > W3 is satisfied, and
when a length of the electrolyte membrane is L1, a length of the noble metal region is L2, and a length of the first electrode is L3, L1 > L2 > L3 is satisfied.

5. The membrane electrode assembly according to any one of claims 2 to 4, wherein,
when a width of the electrolyte membrane is W1, a width of the noble metal region is W2, a length of the electrolyte membrane is L1, and a length of the noble metal region is L2, W2 is 0.8 times or more and less than 1.0 times of W1,
L2 is 0.8 times or more and less than 1.0 times of L1, and
the noble metal region on the first electrode side is entirely surrounded by a region which is not the noble metal region.

6. The membrane electrode assembly according to any one of claims 1 to 5, wherein
the first seal includes a first rubber sheet, a first resin sheet, and a second rubber sheet,
the first rubber sheet, the first resin sheet, and the second rubber sheet are stacked,
the first resin sheet is provided between the first rubber sheet and the second rubber sheet,
the second seal includes a third rubber sheet, a second resin sheet, and a fourth rubber sheet,
the third rubber sheet, the second resin sheet, and the fourth rubber sheet are stacked, and
the second resin sheet is provided between the third rubber sheet and the fourth rubber sheet,

7. The membrane electrode assembly according to any one of claims 1 to 6, wherein
a Young's modulus of the first seal within a range of 5°C or more and 100°C or less is 0.001 GPa or more and 5GPa or less, and
a Young's modulus of the second seal within a range of 5 °C or more and 100°C or less is 0.001 GPa or more and 5 GPa or less.

8. The membrane electrode assembly according to any one of claims 1 to 7, wherein
the first seal includes a first rubber sheet, a first resin sheet, and a second rubber sheet,
the first rubber sheet, the first resin sheet, and the second rubber sheet are stacked,
the first resin sheet is provided between the first rubber sheet and the second rubber sheet,
an inside surface of the first seal is in contact with a side surface of the first electrode,
a surface of the first rubber sheet facing to the electrolyte membrane is in contact with surface of the electrolyte membrane,
an inside surface of the resin sheet is in contact with the side surface of the first electrode,
the second seal includes a third rubber sheet, a second resin sheet, and a fourth rubber sheet,
the third rubber sheet, the second resin sheet, and the fourth rubber sheet are stacked, and
the second resin sheet is provided between the third rubber sheet and the fourth rubber sheet,
an inside surface of the second seal is in contact with a side surface of the second electrode,
a surface of the third rubber sheet facing to the electrolyte membrane is in contact with surface of the electrolyte membrane,
the inside surface of the resin sheet is in contact with the side surface of the second electrode.

9. The membrane electrode assembly according to any one of claims 2 to 5, wherein
the first seal is in contact with a region of the electrolyte membrane where the noble metal region does not exist.

10. The membrane electrode assembly according to any one of claims 2 to 5 and 9, wherein
the first seal is in contact with a region of the electrolyte membrane where the noble metal region does not exist, and
the first seal is in contact with a region of the electrolyte membrane where the noble metal region exists.

11. The membrane electrode assembly according to any one of claims 1 to 10, wherein
the first electrode includes a substrate and a catalyst layer,
the amount of metal per area of the catalyst layer is 0.02 mg/cm² or more and 1.0mg/cm² or less, and
a porous ratio of the catalyst layer is 10% or more and 90% or less.

12. The membrane electrode assembly according to any one of claims 1 to 11, wherein,
when a width of the electrolyte membrane is W1, and a width of the first electrode is W3, W1- W3 satisfies 0.01 times or more and 0.2 times or less of W1, and
when a length of the electrolyte membrane is L1 and a length of the first electrode is L3, L1 - L3 satisfies 0.01 times or more and 0.2 times or less of L1.

13. The membrane electrode assembly according to any one of claims 1 to 12, wherein,
when a width of the electrolyte membrane is W1, and a width of the second electrode is W4, W1- W4 satisfies 0.01 times or more and 0.2 times or less of W1, and
when a length of the electrolyte membrane is L1 and a length of the second electrode is L4, L1 - L4 satisfies 0.01 times or more and 0.2 times or less of L1.

14. A laminating method comprising;
facing an electrolyte membrane provided on a first press plate to a first seal having a first opening and a first electrode housed in the first opening which are provided on a second press plate,
laminating the faced member by heating,
cooling the heated and laminated member,
detaching the first press plate and the second press plate, and
peeling off the first seal that is optional.

15. A laminating method comprising;
facing an electrolyte membrane provided on a first press plate to a second seal having a second opening and a second electrode housed in the second opening which are provided on a second press plate,
laminating the faced member by heating,
cooling the heated and laminated member,
detaching the first press plate and the second press plate, and
peeling off the second seal that is optional.

16. The laminating method according to claim 14 or 15, wherein
the first seal includes a first rubber sheet, a first resin sheet, and a second rubber sheet,
the first rubber sheet, the first resin sheet, and the second rubber sheet are stacked,
the first resin sheet is provided between the first rubber sheet and the second rubber sheet,
an inside surface of the first seal is in contact with a side surface of the first electrode,
a surface of the first rubber sheet facing to the electrolyte membrane is in contact with surface of the electrolyte membrane,
an inside surface of the resin sheet is in contact with the side surface of the first electrode,
the second seal includes a third rubber sheet, a second resin sheet, and a fourth rubber sheet,
the third rubber sheet, the second resin sheet, and the fourth rubber sheet are stacked, and
the second resin sheet is provided between the third rubber sheet and the fourth rubber sheet,
an inside surface of the second seal is in contact with a side surface of the second electrode,
a surface of the third rubber sheet facing to the electrolyte membrane is in contact with surface of the electrolyte membrane,
the inside surface of the resin sheet is in contact with the side surface of the second electrode.

17. An electrochemical cell comprising;
the membrane electrode assembly according to any one of claims 1 to 13, wherein,
the first electrode is an anode.

18. A stack comprising;
the membrane electrode assembly according to any one of claims 1 to 13, wherein,
the first electrode is an anode.

19. An electrolyzer comprising;
the stack according to claim 18, wherein,
the first electrode is an anode or a cathode.
